# EUROPEAN PATENT APPLICATION

(11) **EP 1 507 327 A1**
(43) Date of publication of application: **16.02.2005**
(21) Application number: 04019250.2
(22) Date of filing: 13.08.2004
(51) Int. Cl.: H02J 9/06

(54) **Emergency lighting unit with integrated electronic ballast**

(30) Priority: 13.08.2003 DE 10337148
(71) Applicant: Sander Elektronik AG, 5314 Kleindöttingen (CH)
(72) Inventor: Noé, Michel, 5314 Kleindöttingen (CH); Serru, Patrick, 5314 Kleindöttingen (CH)
(74) Representative: Gleiss, Alf-Olav, Dr.jur. Dipl.-Ing.

(57) **Abstract**

The invention relates to an electronic circuit to be used in a self-contained emergency lighting in maintained mode, comprising an AC/DC input converter (1), a DC/DC converter (3), an electronic ballast (5) and an electronic control circuit (4). The electronic circuit is characterised in that the electronic control circuit (4) supervises the low volt input DC voltage (LVDC) and/or the battery current to recognise a failure of the direct mains input (DPH) and in consequence to switch from normal mode to emergency mode and to control the high voltage DC voltage (HVDC) of the electronic ballast (5) in the emergency mode in order to adjust the output power of the lamp (6) in the emergency mode to the needed requirement.

## Description

### BACKGROUND OF THE INVENTION

### Field of the invention

The invention concerns an electronic circuit to be used in a maintained mode operating self-contained emergency lighting, comprising an AC/DC input converter, a DC/DC converter, an electronic ballast and an electronic control circuit, according to the pre-characterising part of claim 1.

### Terminology

The present invention is related to emergency lighting using discharge lamps, commonly known as fluorescent lamps.

Emergency lighting can be performed by putting a so-called "emergency lighting unit" (abbreviated as ELU) and a battery inside a lighting appliance, called luminaire in the following. The emergency lighting unit (ELU) is an electronic module with the following main functions: mains monitoring, battery charging and energy conversion. In case of mains failure, the ELU converts the DC current of the battery into AC current suitable to the fluorescent lamp. The battery provides the energy to run the lamp on emergency during the required backup time.

When both the battery and the ELU are located inside the luminaire or close to it, the luminaire is a so-called "self-contained emergency lighting".

The luminaire is used in the so-called "maintained mode" in both the following cases:
- when the same luminaire is used for both emergency and normal lighting
- when the emergency luminaire has to be switched on, not only when there is a mains failure, but also when the mains is available.

In those cases the luminaire has two operating modes:
- a normal mode with a switched mains input to switch on and off the luminaire when there is no mains failure. This mains input SPH will be called "switched mains" or switched mains input, SPH.
- an emergency mode where the luminaire is switched on from the battery through the ELU in case of mains input failure. This mains input is not the same mains input as the switched mains input SPH and will be called "direct mains" or direct mains input, DPH.

In order to operate in the normal mode, the luminaire also needs an electronic ballast so that the fluorescent lamp can be switched on using the "switched mains".

### State of art

There are many well-known ways of combining converters to build an emergency lighting unit and to associate it with an electronic ballast to perform emergency luminaries working in the "maintained mode".

The most common one is to design an emergency lighting unit comprising a battery charger and an "emergency electronic ballast" working from the battery low voltage. The fluorescent lamp is connected through relay contacts either to a normal standard electronic ballast when the mains is present (with full or rated lamp light output), or to the "emergency electronic ballast" using the battery energy in case of mains failure (with reduced or dimmed lamp light output).

The obvious disadvantage of such a solution is that there are two electronic ballasts in the emergency luminaire (i.e. the standard one and the emergency one). Electromechanical relays are also required and they are generally included in the emergency lighting unit.

Solutions to use the same electronic ballast in both cases, mains present and emergency mode, are also known.

WO 00/27013 proposes a solution in which the emergency lighting unit is combined with a normal standard electronic ballast which usually accepts AC and DC-voltages at its input. This standard electronic ballast is supplied from the AC-mains when it is present, or from a DC-voltage created by a DC to DC converter from the battery voltage when there is a mains failure. In such a solution, there are still two electronic modules in the emergency lighting, which implies more connections and more space, and relay contacts are still required.

EP 1 274 286 A1 is very similar to the previous mentioned one. It has the following advantage over the previous one: it makes use of standard dimmable electronic ballasts. By using the dimming input of such ballasts, it is possible to have a reduced lamp light output in case of emergency.

DE 42 10 367 A1 as well uses the same electronic ballast in both emergency and normal mode. Its use is restricted to centralised emergency lighting, where a main battery supplies all the emergency lightings in case of mains failure. In such an embodiment, the wave shape of the power supply is used in order to reduce the light output. When the mains is present, the input voltage is a sinewave, and the electronic ballast is controlled to deliver its full output power. When there is a mains failure, the input voltage is the battery voltage, therefore a DC-voltage, and the electronic ballast output power is dimmed. Such a solution is not applicable to self-contained emergency lighting (i.e. battery inside the luminaire).

DE 33 22 943 C2 discloses a solution where the same electronic ballast is used in both emergency and normal mode. When the mains is available, there is a high DC voltage present at the electronic ballast input. In case of mains failure, this high DC voltage is produced by a DC to DC converter from the battery low DC voltage. The same electronic ballast can therefore be used in both cases, emergency and normal. However, this solution requires two rectifiers, one to supply the battery charger, and the other one to generate the high DC voltage. Moreover, the rectifier generating the high DC voltage from the mains is a simple diode bridge and not an ac to DC converter, which makes it inadequate for power factor correction. Another point mentioned not until now concerns the possibility of dimming in the emergency mode.

Other documents disclose combinations of converters to produce emergency lighting. US 6,577,513 B1 concerns an uninterruptible power supply where additionally emergency lighting can be produced in case of mains failure, but only in emergency mode, not in normal mode. Additionally, there is still a need for an electromechanical relay. DE 10 259 585 A1 also describes a combination of well-known converters, and is very similar to DE 33 22 943 C2 mentioned above. The same drawback can be noted: use of two different AC to DC converters (one to generate the high dc-voltage, the other one to charge the battery).

The present invention solves the mentioned problems by an electronic circuit to be used in a maintained mode operating self-contained emergency lighting with the features of claim 1. The electronic circuit comprises an AC/DC input converter converting the direct mains input (DPH) into DC voltages on the secondary side, a high voltage DC voltage (HVDC) to supply an electronic ballast and a low volt DC voltage (LVDC) to charge a battery, a DC/DC converter converting the battery voltage into the high volt DC voltage (HVDC) to supply the electronic ballast, an electronic ballast converting the high volt DC voltage (HVDC) into an AC current to ignite a lamp, an electronic control circuit which switches from normal mode to emergency mode in case of direct mains input (DPH) failure, which switches back from emergency mode to normal mode in case of direct mains input (DPH) within tolerances, which commands and controls the DC/DC converter under emergency mode, which supervises the battery voltage under normal mode as well as under emergency mode in order to protect the battery, which commands and controls the electronic ballast under normal mode according to the state of the switched input mains (SPH) and which supervises the lamp (6) current. The electronic circuit is characterised in that the electronic control circuit supervises the low input DC voltage (LVDC) and/or the battery current to recognise a failure of the direct mains input (DPH) and in consequence to switch from the normal mode into the emergency mode, and to control the high volt DC voltage (HVDC) of the electronic ballast in the emergency mode in order to adjust the output power of the lamp in the emergency mode to the needed requirement.

While in general, with self-contained emergency lighting in maintained mode, the luminaire comprises a battery, an emergency lighting unit, an electronic ballast and a fluorescent lamp, the luminaire of the present invention concerns an electronic circuit which integrates both the emergency lighting unit and the electronic ballast in one electronic module. The same integrated electronic ballast operates thus both in emergency and in normal mode to supply current to the lamp.

This comprises the features listed below:
- Use of the same electronic ballast in both emergency and mains operation. Such a use is well known. In difference to the prior state of the art, in the present invention however, the electronic ballast is integrated on the same circuit board as all the other functions, and the fluorescent lamp is isolated from the mains. Due to these features, the electronic ballast can be driven and protected by the same electronic control circuit which already supervises everything else. Moreover, in the electronic ballast of the present patent, the light output power is depending on its high volt DC voltage (HVDC). Using this feature, the output power provided to the lamp in emergency mode can be regulated, and hence the power provided by the battery is also regulated in emergency mode.
- Special regulation of the AC/DC input converter: The high volt DC voltage (HVDC) of this converter changes according to the switching on or switching off of the switched phase (SPH). By simply supervising the high volt DC voltage (HVDC), the electronic control circuit can accordingly enable or disable the electronic ballast and hence switch on or switch off the lamp. There is no need for additional isolated circuitry to monitor the state of the switched phase (SPH).
- Design of the AC/DC input converter. This converter is designed as a self-oscillating flyback converter, which is a well-known design. The innovation is realized by its use as a single AC to DC converter which generates the output DC voltage (high voltage HVDC) for the electronic ballast, which generates also the output DC voltage (low voltage LVDC) for the battery charging, which can have a very high power factor (and hence comply to the required regulations) and which maintains the battery charging current independent of the state of the luminaire (lamp switched on or lamp switched off).

Other features of the invention can be taken from the claims.

For purpose of illustrating, the invention is shown in a drawing. The drawing is a form, which is presently preferred, but it being understood, however, that the invention is not limited to the precise arrangement and instrumentality shown.

The drawing shows in:
- Figure 1:: a schematic diagram of an electronic module to be used in an emergency lighting ;
- Figure 2:: a schematic diagram of an input AC/ DC converter.

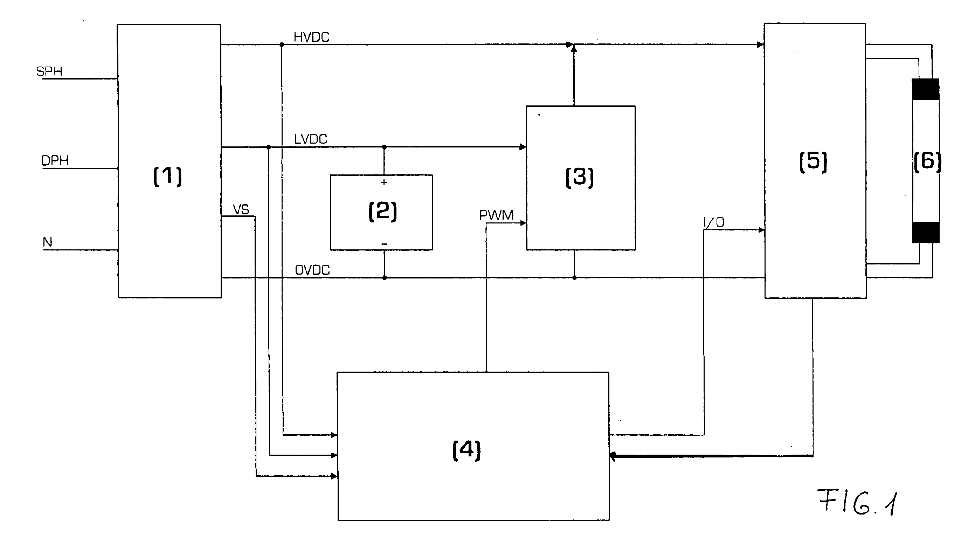

Figure 1 shows an electronic module to be used in an emergency lighting, comprising an electronic circuit with an AC/DC input converter 1, a DC/DC converter 3, an electronic ballast 5 and an electronic control circuit 4 together with a battery 2 and a fluorescent lamp 6. In combination of the electronic circuit with the battery 2 and the fluorescent lamp 6 the electronic module is used to produce emergency lighting as well as normal lighting.

The electronic circuit is put in a luminaire, not shown in figure 1, together with a battery 2 and a fluorescent lamp 6 to perform an emergency light fitting. The luminaire is fed from two mains inputs 1: the direct mains input DPH and the switched mains input SPH. The same integrated electronic ballast 5 operates both in emergency and in normal mode to supply current to the fluorescent lamp 6. Emergency mode is activated in case of direct mains input DPH failure and normal mode is activated when the switched mains SPH is switched on.

In detail, the invention comprises:
- an AC/DC input converter 1 which converts the direct mains input voltage DPH into DC-voltages, one LVDC to charge the battery and the other HVDC to eventually supply current to the electronic ballast 5. The switched mains input SPH is only treated as a signal which modifies the input converter 1 output voltage, so that the electronic control circuit 4 can supervise the switched input mains SPH simply by measuring the HVDC DC voltage (low when SPH is on). This AC/DC input converter 1 is regulated from the primary side so that the battery charging current can be constant, between the no-load case with HVDC DC voltage high which corresponds to lamp off and the full-load case with HVDC DC voltage low which corresponds to lamp on.
- a DC/DC converter 3 which, in case of direct mains input DPH failure, converts the battery voltage into the HVDC DC voltage to supply current to the electronic ballast 5.
- an electronic control circuit 4 which measures the HVDC voltage to activate or inhibit the electronic ballast, which activates the DC/DC converter 3 and regulates the HVDC voltage in case of direct mains input DPH failure, which supervises the lamp current in order to protect the electronic ballast 5 in case of lamp failure and which supervises the battery voltage in order to protect the battery 2.
- an electronic ballast 5 which is fed from the HVDC voltage and converts this DC voltage into AC current for the fluorescent lamp.

The two operating modes of the electronic module are the following:
- normal mode: when the direct mains input (direct phase DPH to neutral) is within tolerances, the battery 2 is charged or maintained charged. The fluorescent lamp 6 can be switched on and off by the switched mains input (switched phase SPH to neutral).
- emergency mode: when the direct mains input (direct phase DPH to neutral) is outside the rated standard value (defined by regulations), the fluorescent lamp 6 is switched on from the battery, whatever the value of the switched mains SPH might be.

The advantages of the innovation lies in the following features:
- Use of the same electronic ballast in both emergency and mains operation. Such a use is well known. In the present invention however, the electronic ballast 5 is integrated on the same circuit board as all the other functions, and the fluorescent lamp 6 is isolated from the mains. Due to these features, the electronic ballast can be driven and protected by the same electronic control circuit 4 which already supervises everything else. Moreover, in the electronic ballast 5 of the present invention, the light output power is depending on its input DC voltage HVDC. Using this feature, the output power given to the lamp in emergency mode can be regulated, and hence the power provided by the battery is also regulated in emergency mode.
- Special regulation of the AC/DC input converter 1: the output DC voltage HVDC of this converter changes according to the switching on or switching off of the switched phase SPH. By simply supervising the HVDC voltage, the electronic control circuit 4 can accordingly enable or disable the electronic ballast and hence switch on or switch off the lamp. There is no need for additional isolated circuitry to monitor the state of the switching phase SPH.
- Design of the AC/DC input converter 1. This converter is designed as a self-oscillating flyback converter, which is a well-known design. The innovation is realized by its use as a single AC to DC converter which generates the output DC voltage (high voltage HVDC) for the electronic ballast, which generates also the output dc voltage (low voltage HVDC) for the battery charging, which can have a very high power factor (and hence comply to the required regulations) and which maintains the battery charging current independent of the state of the luminaire (lamp switched on or lamp switched off).

### Detailed description

The AC/DC input converter 1 is a switched-mode converter which converts the direct mains AC input (direct phase DPH to neutral) into two DC voltages, HVDC and LVDC with respect to 0VDC. The secondary side, HVDC and LVDC, is isolated from the primary side, SPH and DPH. The LVDC voltage is used to charge the battery or to maintain the battery charged, depending on the battery technology. In case of NiCd cells, the charging current must be kept constant. The HVDC voltage is used to supply current to the electronic ballast, and eventually to the fluorescent lamp. Additionally, the AC/DC input converter can supply a voltage signal (VS) to the electronic control circuit 5 to give an indication of direct mains DPH failures. This direct mains failure detection can alternatively be done by supervising the HVDC or LVDC voltages or of the battery charging current.

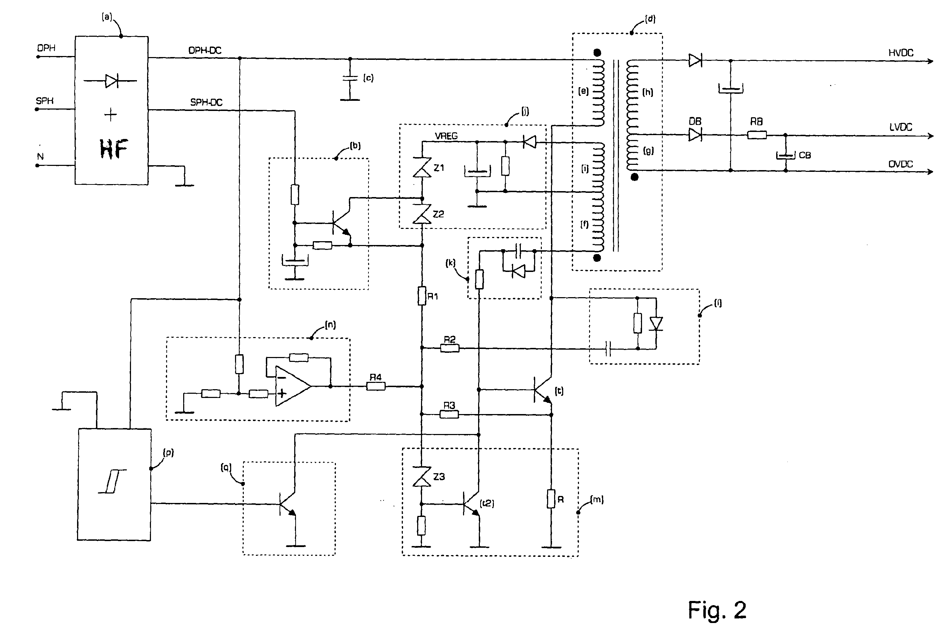

The details of the AC/DC converter 1 are shown in figure 2. It is a well-known self-oscillating flyback converter comprising basically of an input high-frequency filtering and bridge circuitry a, of a filter capacitor c, of a transformer d with main winding e, base-drive winding f, secondary windings g and h, of a base drive circuit k, and of a main switching transistor t with switching assistance circuitry I and current limitation circuitry m. This current limitation circuit is operating as follows: the t-transistor current is flowing in the shunt resistor R. As soon as the voltage across R exceeds the zener voltage Z3 (+ basis voltage of transistor t2), a current flows in the resistor R3 and the transistor t2 is switched on. The basis voltage of t is thus shortcircuited. The transistor t stops to conduct. The current limitation circuit m is thus used to switch off the main transistor t. It is operating once per cycle.

### - Voltage regulation of the ac to dc input converter:

There is only a primary side regulation, which means that the output voltages HVDC and LVDC are not fed back in the primary regulation circuit. The secondary side resistive losses of the converter are not compensated for. This primary side regulation is implemented by the additional winding i of the transformer d and by the circuitry j. As soon as the voltage VREG exceeds the cumulated zener voltages of Z1, Z2 and Z3 (+ basis voltage of t2), a current flows in the resistor R1 and the current limitation circuit is acting on a lower level. This above-described current limitation circuit is acting as an inner current loop regulation, the current regulation being implemented by the current measurement made on the resistor R, and the reference value by the value of the zener diode Z3. By injecting current through R1, the voltage regulation circuit modifies the current reference level. In the overall voltage regulation loop, the measured value to be regulated is the voltage VREG and the reference value is the sum of the zener diode values. By choosing the value of R1 in relation to R3, it is possible to get the desired V/I output characteristics of the converter.

### - Power factor correction

The signal DPH-DC is obtained by simple rectification of the direct phase input DPH. If the capacitor is small -i.e. it cannot supply the low frequency current (100Hz) drawn by the converter-, the signal DPH-PH is a rectified sinewave, and the current drawn from the mains (on the phase DPH) is also a sinewave, which can be adequate enough for the required power factor correction. If needed, power factor correction can be improved using the circuit n which feeds an inverted image of the rectified input voltage into the current regulation circuit through the resistor R4. The current reference is then modulated by the input voltage and hence the mains input current sinewave shape can be corrected. By adding phase lag or phase lead in the op.amp. of circuit n, it is also possible to correct the current phase in relation to the mains.

### - Mains failure detection

By filtering the rectified mains input DPH-DC and comparing it to reference levels, the switching on and switching off can be implemented. The reference levels have to comply to the regulations. This straightforward function is represented by the circuits p and q.

### - Switching the lamp on or off under normal mode

The switched mains input (switched phase SPH to neutral) has only an effect on the value of the output DC voltages (HVDC and LVDC). When the switched mains input SPH is switched on, the HVDC voltage decreases. As this voltage is supervised by the electronic control circuit 4, this circuit can then ignite the fluorescent lamp 6 through the electronic ballast 5. This function can be implemented by modifying the voltage regulation of the input converter when the switching phase SPH has been switched on. An example of implementation is given by the circuit b. The signal SPH-DC is obtained by simple rectification of the input phase SPH. When the phase SPH-DC has been switched on, the transistor in the circuit b short-circuits the zener diode Z2, and hence, due to the voltage regulation, the voltage HVDC drops accordingly. Furthermore, when the electronic ballast 5 is turned on by the electronic control circuit 4, the input converter 1 is loaded. Due to the regulation on the primary side only, the load variations are not compensated for, and therefore, the HVDC voltage drops further, creating an hysteresis effect on the switching on.

### - Battery current regulation

There are only two stable states of operation in the normal mode. In one state, the switched mains input SPH is switched off, the output voltage HVDC is high and the input converter is operating practically at no-load because the lamp is off. In the second state, the switched mains input SPH is switched on, the output voltage HVDC is reduced and the input converter is operating at full load because the lamp is on. In the first state, HVDC is high, but due to the fact that there is no load, the conduction time of the transistor -and of the secondary diodes like DB- is short. In the second state, it is the opposite, HVDC is lower but the conduction time is longer.

In both cases, the battery charging current should ideally remain constant, only depending on the battery voltage. This can be implemented by inserting a resistor RB in series with the diode DB between the winding g and the capacitor CB on the output low voltage LVDC where the battery has to be connected. By inserting this resistor, the charging current flowing in RB in filtered out. Either it is high for a short time (first state) or lower for a longer time (second state). By choosing the adequate winding g and the value of RB, it is possible to get the same charging current in both states, lamp off and lamp on. The charging current will then only depend on the battery voltage.

The electronic circuit 4 has the following functions:
- Supervise the HVDC voltage to find out if the switched mains input SPH has been switched on or off. If it has been switched on, activate the normal mode, which means: command and control the electronic ballast 5, i.e. switch it on and check that the lamp 6 current is within tolerances.
- Supervise the output voltages HVDC or LVDC of the AC/DC input converter 1, or a specific voltage signal produced by the converter 1, or the battery charging current to find out if the direct mains input DPH is within tolerances. If not, activate the emergency mode, which means: command and control the dc/dc converter 3, preferably using a pulse-width-modulation signal, regulate the HVDC voltage in order to get a constant output power out of the battery, switch on the electronic ballast 5 and check that the lamp 6 current is within tolerances.
- Supervise the battery voltage under emergency mode to check the battery 2 in case of self-testing or to switch the DC/DC converter 3 off in case of deep discharge (battery protection)
- Supervise the battery voltage under normal mode to check the battery charging circuit.
- Control and test the lamp 6. This is preferably done by checking the lamp current, which is too low when the lamp has been removed, or too high when the lamp is deactivated.

The electronic control circuit 4 is preferably realized using a microprocessor or a microcontroller, preferably with PWM (pulse-width-modulation) output signal and means of measuring analog voltages (analog to digital conversion capability or comparator inputs).

The DC/DC converter 3 is basically a switched-mode step-up converter, converting the battery dc-voltage to a higher voltage HVDC when the unit is operating in the emergency mode.

The converter is preferably a flyback type converter, using a MOSFET type transistor driven from the PWM output of the microcontroller. The regulation is preferably done on the output voltage of the converter HVDC. This means that the electronic control circuit can regulate the HVDC voltage in emergency mode, and thus the input voltage of the electronic ballast.

This electronic ballast 5 is preferably a well known self oscillating half-bridge ballast. The design is done in order to get the full rated power of the fluorescent lamp 6 under the HVDC voltage value reached when the switched mains input SPH is on and the fluorescent lamp 6 is present.

By regulating the HVDC voltage under emergency mode, which is the input voltage of the electronic ballast 5, the control circuit 4 can control and adjust the dimming of the fluorescent lamp (if needed). A typical value of the light output in emergency mode is about 30% of the light output in normal mode.

The electronic ballast 5 is controlled by the electronic circuit 4. It can be switched on and off. There can also be some protection circuit to protect the ballast in case of lamp 6 failure (lamp deactivated), or special circuit to implement start sequences for lamp ignition under emergency and/or normal mode.

To summarise the present invention comprises an electronic module which comprises the emergency lighting unit and the battery. That is advantageous, because all functions are integrated on one circuit board. The dimensions of the circuit board are preferably 170 mm x 30 mm.

## Claims

1. Electronic circuit to be used in a maintained mode operating self-contained emergency lighting, comprising:
- an AC/DC input converter (1) converting the direct mains input (DPH) into DC voltages on the secondary side, a high voltage DC voltage (HVDC) to supply an electronic ballast (5) and a low volt DC voltage (LVDC) to charge a battery (2),
- a DC/DC converter (3) converting the battery voltage into the high volt DC voltage (HVDC) to supply the electronic ballast (5),
- an electronic ballast (5) converting the high volt DC voltage (HVDC) into an AC current to ignite a lamp (6),
- an electronic control circuit (4) which switches from normal mode to emergency mode in case of direct mains input (DPH) failure , which switches back from emergency mode to normal mode in case of direct mains input (DPH) within tolerances, which commands and controls the DC/DC converter (3) under emergency mode, which supervises the battery voltage under normal mode as well as under emergency mode in order to protect the battery (2), which commands and controls the electronic ballast (5) under normal mode according to the state of the switched input mains (SPH) and which supervises the lamp (6) current, **characterised in that** the electronic control circuit (4) supervises the low input DC voltage (LVDC) and/or the battery current to recognise a failure of the direct mains input (DPH) and in consequence to switch from the normal mode into the emergency mode, and to control the high volt DC voltage (HVDC) of the electronic ballast (5) in the emergency mode in order to adjust the output power of the lamp (6) in the emergency mode to the needed requirement.

2. Electronic circuit to be used in a maintained mode operating self-contained emergency lighting, comprising:
- an AC/DC input converter (1) converting the direct mains input (DPH) into DC voltages on the secondary side, a high voltage DC voltage (HVDC) to supply an electronic ballast (5) and a low volt DC voltage (LVDC) to charge a battery (2),
- a DC/DC converter (3) converting the battery voltage into the high volt DC voltage (HVDC) to supply the electronic ballast (5),
- an electronic ballast (5) converting the high volt DC voltage (HVDC) into an AC current to ignite a lamp (6),
- an electronic control circuit (4) which switches from normal mode to emergency mode in case of input AC voltage failure (DPH), which switches back from emergency mode to normal mode in case of input AC voltage (DPH) within tolerances, which commands and controls the DC/DC converter (3) under emergency mode, which supervises the battery voltage under normal mode as well as under emergency mode in order to protect the battery (2), which commands and controls the electronic ballast (5) under normal mode according to the state of the switched input mains (SPH) and which supervises the lamp (6) current, **characterised in that** the AC/DC converter (1) generates a voltage signal (VS) on the secondary side for the input power which indicates the state of the mains input (DPH), whereas this voltage signal (VS) - preferably continuous - is supervised by the electronic control circuit (4), that the electronic control circuit (4) recognises a failure of the mains input (DPH) and switches in consequence from the normal mode to the emergency mode and that the electronic control circuit (4) controls the high volt DC voltage (HVDC) of the electronic ballast (5) in the emergency mode to adjust the output power of the lamp (6) in the emergency mode to the needed emergency light requirement.

3. Electronic circuit according to claim 1 or 2, **characterised in that** the switched mains input (SPH) has an effect on the regulation of the AC/DC input converter (1), resulting in a high volt DC voltage (HVDC) drop on the secondary side in case the switched mains input (SPH) is present on the converter (1) input, and that the electronic control circuit (4) measures this voltage drop to get the information that the switched mains input (SPH) has been switched on, in order to start the electronic ballast (5) and ignite the lamp (6).

4. Electronic circuit according to one of the preceding claims, **characterised in that** the AC/DC converter (1) is a switched mode flyback type converter with a regulation on the primary side and that this control modulates the switching of a transistor on the primary side in such a way that the turn-on time is longer under full load condition which happens in case the high volt DC voltage (HVDC) is low and the lamp (6) is ignited and in such a way that the turn-on time is shorter under light load condition which happens when the high volt DC voltage (HVDC) is high and the lamp (6) is not ignited, full load and light load conditions resulting both in an almost constant value of the low volt DC voltage (LVDC) and therefore in an almost constant value of the battery charging current.

5. Electronic circuit according to one of the preceding claims, **characterised in that** the AC/DC input converter (1) is a self-oscillating flyback converter, comprising an input rectifier (a) and a filter (c), with means for detecting mains failure (p) and means for blocking the converter (q), with a transformer (d) comprising windings (e), (i), (f), (h) and (g), with a transistor (t) with a base drive circuit (k), with means to assist the transistor switching and with a current limiting circuit (m) operating in case the current measurement over a shunt (R) exceeds a zener diode voltage (Z3) incremented by the basis to an emitter voltage of a blocking transistor (t2).

6. Electronic circuit according to one of the preceding claims, **characterised in that** the AC/DC converter (1) comprises a voltage regulation on the primary side and that the regulation is performed by a voltage regulation loop, a measured value (VREG) being obtained by rectification and filtering of a voltage produced on a primary winding (i), and a reference value being obtained by adding the values of two zener diodes (Z1, Z2) and of the zener diode (Z3) used in the current limitation circuit and that a difference between the measured value (VREG) and the reference value (Z1+Z2+Z3) results in a circulation of a current in a resistor (R1), this current modifying the current limitation level of the current limitation circuit (m).

7. Electronic circuit according to one of the preceding claims, **characterised in that** the two zener diodes (Z1, Z2) needed to generate the voltage reference in the voltage regulation loop are arranged in such a way that two zener diodes (Z1, Z2) are put in series, and that the switched mains input (SPH) in case it has been switched on, creates a short-circuit on one of the zener diodes (Z1, Z2) in the voltage regulation loop in order to produce the required modification of the reference voltage and -in consequence- of the measured voltage (VREG) and of the high volt DC voltage (HVDC).

8. Electronic circuit according to one of the preceding claims, **characterised in that** the battery charging current remains constant in both states of the normal mode which are lamp on and lamp off and that this current is flowing in a resistor (RB) which is put in series with a second diode (DB) in the secondary winding (g) generating the low volt DC voltage (LVDC) connected to the battery (2), a filtering capacitor (CB) and the battery (2) being connected only behind the resistor (RB) and the diode (DB).

9. Electronic circuit according to one of the preceding claims, **characterised in that** the power factor is improved by injecting a current in the zener diode (Z3) used in the current limitation circuit, and that this current is generated by a voltage being proportional to the inverted rectified input voltage (DPHDC) across a resistor.
